# FASCICULE DE BREVET EUROPEEN

(11) **EP 2 212 127 B1**
(45) Date de publication et mention de la délivrance du brevet: **08.06.2011**
(21) Numéro de dépôt: 08842677.0
(22) Date de dépôt: 21.10.2008
(51) Int. Cl.: B60C 19/00

(54) **DISPOSITIF INTERNE A UN PNEU POUR DIMINUER LE BRUIT EN ROULAGE**
VORRICHTUNG IN EINEM REIFEN ZUR REDUZIERUNG VON ROLLGERÄUSCHEN
DEVICE INSIDE A TYRE FOR REDUCING ROLLING NOISE

(30) Priorité: 24.10.2007 FR 0758543
(43) Date de publication de la demande: 04.08.2010
(73) Titulaire: Société de Technologie MICHELIN, 63000 Clermont-Ferrand (FR); MICHELIN Recherche et Technique S.A., 1763 Granges-Paccot (CH)
(72) Inventeur: DAUTREY, Nicolas, Gunma 373-8668 (JP); SHIMANAKA, Nanae, Gunma 373-8668 (JP); GREVERIE, Ludovic, Gunma 373-8668 (JP); PAGANO, Salvatore, Gunma 0373-0828 (JP)
(74) Mandataire: Diernaz, Christian
(86) Numéro de dépôt international: PCT/EP2008/064196
(87) Numéro de publication internationale: WO 2009/053352

(56) Documents cités:
- EP-A- 0 038 920
- EP-A- 1 918 086
- JP-A- 63 291 709
- JP-A- 2006 117 115
- US-B1- 6 343 843

## Description

L'invention concerne les pneus et en particulier les dispositifs permettant de réduire le bruit des pneus en roulage.

Afin de réduire le bruit en roulage des pneus sur un véhicule, il est connu d'agir notamment sur la part du bruit résultant de la mise en vibration de l'air de gonflage contenu dans la cavité délimitée par un pneu et sa jante de montage (en anglais : '*tyre cavity noise'*) *;* dans ce but, il est connu de pourvoir intérieur du pneu (c'est-à-dire la partie sur laquelle s'exerce la pression de gonflage du pneu) avec des matériaux à base de mousse ou de fibres. Le document US-A-6343843 décrit les caractéristiques techniques du préambule de la revendication 1.

Les demandes de brevet JP2006-117115 ou JP2004-082787 décrivent des structure de pneu selon lesquelles la paroi interne du pneu est revêtue avec une pluralité de fibres formant un revêtement atténuant le bruit. Bien que réduisant le bruit de cavité, ces solutions nécessitent d'être encore améliorées. En effet, la mise en oeuvre de ces solutions ne permet pas d'obtenir des densités volumiques élevées de fibres.

Un objectif de la présente invention est de fournir une solution à ce problème, c'est-à-dire à proposer un pneu dont la cavité interne du pneu, c'est-à-dire la cavité à l'intérieur de laquelle agit la pression de gonflage est pourvue de fibres selon une densité de recouvrement en volume de ladite cavité, cette densité de recouvrement, mesurée au voisinage de la paroi du pneu délimitant la cavité, étant très supérieure aux densités usuelles.

Pour ce faire, il est proposé un pneu destiné à un usage sans chambre à air, ce pneu comprenant un sommet pourvu d'une bande de roulement destinée à venir en contact avec la chaussée pendant le roulage, des flancs prolongeant de part et d'autre le sommet, ces flancs étant reliés à des bourrelets destinés à être en contact avec une jante de montage du pneu. Ce pneu a une paroi interne délimitant avec la jante de montage une cavité interne pour permettre le gonflage du pneu.

Ce pneu comprend, sur au moins une partie de sa paroi interne délimitant la cavité interne, une pluralité de protubérances de forme allongée formant un revêtement dense, ce pneu étant caractérisé en ce que ces protubérances de forme allongée comprennent une pluralité de fibres porteuses combinées à une pluralité de fibres de ramification, lesdites fibres de ramification étant fixées auxdites fibres porteuses, chaque fibre porteuse ayant deux extrémités dont l'une au moins est fixée à la paroi interne du pneu.

Grâce au pneu selon l'invention, il est possible de pourvoir la paroi interne d'un pneu avec des fibres de longueur appropriée et selon une densité en volume également appropriée pour avoir un effet sensiblement amélioré sur le bruit interne de cavité lorsque le pneu est en roulage.

Selon un premier mode de réalisation de l'invention, chaque fibre porteuse est pourvue d'une fibre de ramification, ce qui permet d'obtenir des fibres d'une longueur plus grande que celle qu'il est possible d'obtenir avec les procédés de l'état de la technique.

Selon un deuxième mode de réalisation de l'invention, chaque fibre porteuse est pourvue d'une pluralité de fibres de ramification de façon à obtenir une densité en volume beaucoup plus élevée qu'avec des fibres fixées uniquement à la paroi interne du pneu.

Les fibres porteuses et les fibres de ramification peuvent être choisies dans le groupe constitué par des fibres de type suivant : fibres de nylon, PET, acrylique, coton, lin, laine et rayonne.

Préférentiellement, les fibres porteuses (60) ont une longueur au moins égale à 0.5 mm et au plus égale à 10 mm, et un diamètre compris entre 0.01 mm et 0.5 mm.

Préférentiellement, le nombre de fibres porteuses est au moins égal à 5 et au plus égal 100 par unité de surface exprimée en mm².

Afin d'obtenir une densité en volume satisfaisante, il est judicieux de prévoir entre 1 et 20 fibres de ramification par fibre porteuse.

De façon pratique, la mise en place des fibres porteuses sur la paroi interne du pneu délimitant la cavité à l'intérieur de laquelle agit la pression de gonflage, est faite par un procédé de flocage (décrit notamment dans le document de brevet publié sous la référence EP0691224A2). De même, la formation des ramifications avec des fibres de ramification est faite en utilisant le même type de procédé de flocage. Selon le procédé connu de flocage, après avoir enduit la surface destinée à recevoir les fibres porteuses, on procède à un dépôt électrostatique des fibres porteuses en soumettant les fibres porteuses et la bande de roulement à un champ électrique créant une différence de potentiel élevée et de l'ordre de 10kV. Cette même opération est répétée pour mettre en place les fibres de ramification.

Le procédé qui vient d'être décrit permet de manière efficace de mettre en place sur la surface d'une cavité d'un corps quelconque (et notamment un pneu) une pluralité de fibres pour occuper une densité volumique élevée. Dans ce but, le procédé selon l'invention comprend les étapes suivantes :
- enduction de la surface destinée à recevoir des poils avec une colle appropriée ;
- dépôt électrostatique des poils porteurs sur ladite surface en soumettant la bande de roulement à un champ électrique créant une différence de potentiel élevée ;
- enduction des poils porteurs avec une colle pour la fixation des poils de ramification ;
- dépôt électrostatique des poils de ramification en soumettant les poils et la bande de roulement à un champ électrique créant une différence de potentiel élevée.
Cette dernière opération pouvant être répétée autant de fois que nécessaire.

Dans une variante de bande de roulement selon l'invention, les fibres porteuses peuvent être en matériau caoutchouc, ce matériau pouvant être ou non de même nature que la gomme intérieure. Les fibres de ramification peuvent être identiques ou différentes des fibres porteuses. Dans pareil cas, les fibres porteuses ou de ramification ont une longueur allant de 0.5 mm à 20 mm et ont un diamètre allant de 0.5 mm à 5 mm. Préférentiellement, le nombre de fibres porteuses par unité de surface exprimée en millimètre au carré est comprise entre 0.1 à 5.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre en coupe un pneu selon l'invention pourvu sur sa surface intérieure d'une pluralité de fibres porteuses sur lesquels sont collés des fibres de ramification ;

La figure 2 montre un agrandissement d'un fibre porteuse telle qu'utilisée dans la variante de pneu de la figure 1 ;

La figure 3 montre une comparaison des niveaux sonores enregistrés entre différents pneus montrant l'intérêt des pneus selon l'invention ;

La figure 4 montre une variante de réalisation de protubérances destinées à recouvrir l'intérieur d'un pneu ;

La figure 5 montre la mise en oeuvre du procédé de flocage permettant de lier des poils de ramification aux poils porteurs afin de rallonger les poils porteurs ;

La figure 6 montre la mise en oeuvre du procédé de flocage selon lequel on combine à un poil porteur une pluralité de poils de ramification.

### Description des figures

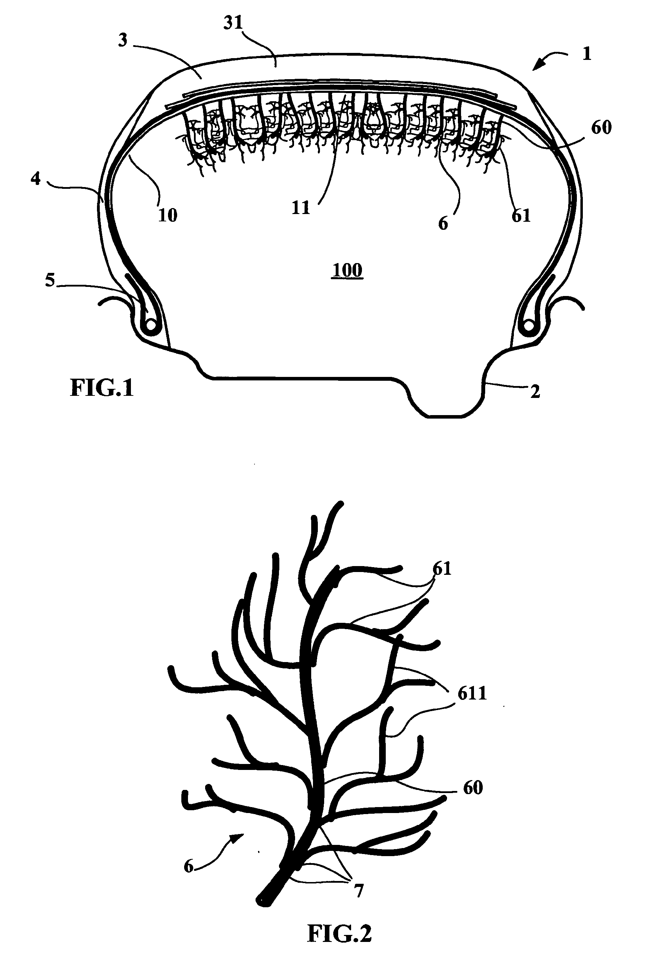

La figure 1 montre une coupe méridienne d'un pneu 1 selon l'invention (c'est-à-dire dans un plan contenant l'axe de rotation du pneu) monté sur sa jante de montage 2 et gonflé à sa pression d'utilisation.

Le pneu 1 comprend un sommet 3 pourvu radialement à l'extérieur avec une bande de roulement 31 destinée à venir en contact avec la chaussée pendant le roulage du pneu. Axialement de part et d'autre de ce sommet 3, le pneu comprend des flancs 4 reliant ce sommet à des bourrelets 5 dont la fonction est d'assurer un contact avec la jante de montage 2. La paroi interne 10 du pneu délimite avec la paroi externe de la jante de montage 2 une cavité 100 destinée à recevoir un gaz de gonflage à une pression donnée correspondant à la pression d'usage du pneu. Pour réaliser une bonne étanchéité, la paroi interne 10 du pneu 1 est, de manière connue, recouverte d'une composition de caoutchouc étanche au gaz de gonflage.

Le pneu 1 selon invention comprend, sur sa paroi interne 10 et dans une région limitée 11 correspondant au sommet du pneu, une structure amortissante pour réduire le bruit de cavité en roulage. Cette structure selon l'invention est formée par une pluralité de protubérances 6 de forme allongée, ces protubérances comprenant une pluralité de fibres porteuses 60 et une pluralité de fibres de ramification 61, lesdites fibres de ramification 61 étant fixées aux fibres porteuses 60 voire à d'autres fibres de ramification.

Dans le cas d'espèce, les fibres porteuses 60 sont en Nylon et ont une longueur moyenne égale à 3 mm. Ces fibres porteuses 60 sont fixées sur la paroi interne 10 du pneu par un procédé de flocage (*"flocking"* en anglais) que l'on peut décrire de la manière suivante : après dépôt d'une composition de colle sur la paroi interne du pneu et plus précisément sur la région concernée, on soumet cette colle, le pneu ainsi que les fibres porteuses à un champ électrique générant une forte différence de potentiel électrique entre lesdites fibres et la paroi interne du pneu. De cette manière, on projette les fibres porteuses sur la paroi interne selon une densité déterminée. Ensuite, une opération similaire est réalisée entre les fibres porteuses et des fibres de ramification qui sont ici choisies identiques aux fibres porteuses. Dans cette dernière opération et avant application du champ électrique, on pulvérise sur les fibres porteuses une composition collante afin de pouvoir coller les fibres de ramification auxdits fibres porteuses. La longueurs moyennes des fibres porteuses et des fibres de ramification sont sensiblement identiques et égales à 3 mm. Cette dernière opération pourrait encore être renouvelée pour augmenter sensiblement la densité de remplissage/couverture en volume de fibres (qu'ils soient porteurs ou de ramification) de manière à accroître l'effet amortissant des vibrations de l'air de gonflage dans la cavité pendant le roulage. Dans l'exemple montré à titre non limitatif, le diamètre des fibres de ramification est sensiblement identique à celui des fibres porteuses et égal à 50 microns de diamètre.

Lorsqu'il est souhaité de mettre une forte densité volumique de fibres de ramification, il est préconisé de choisir des fibres de ramification de section sensiblement plus petite que celle des fibres porteuses et de faire en sorte que chaque fibre porteuse porte de 1 à 10 (voire davantage) de fibres de ramification. L'opération de pulvérisation de colle et ensuite de formation des ramification peut être renouvelée après avoir mis en place une première série de fibres de ramification : dans ce cas, les nouvelles fibres de ramification sont branchées sur des fibres porteuses et sur des fibres de ramification déjà en place.

Si l'exemple décrit avec le support de la figure 1 ne montre qu'une partie du profil du pneu revêtue avec des protubérances selon l'invention, il est aisé d'étendre la couverture de la paroi interne du pneu de façon à disposer d'un bourrelet à l'autre du pneu un revêtement formé d'une pluralité de protubérances selon l'invention, chaque protubérance étant composée d'une fibre porteuse sur laquelle est fixée au moins une fibre de ramification.

Sur la figure 2, on distingue une vue agrandie d'une protubérance allongée 6 comprenant une fibre porteuse 60 pourvue d'une pluralité de points de ramification 7 auxquels sont collées des fibres de ramification 61. On distingue que des points de collage ou de ramification 7 entre les fibres de ramification 61 et fibre porteuse 60 ont été formés tout le long de la fibre porteuse. Dans le cas présent, la longueur des fibres porteuses est supérieure à celle des fibres de ramification. Par ailleurs, certaines fibres de ramification 61 collées à la fibre porteuse 60 sont elles mêmes pourvues de fibres de ramification 611 ce qui permet d'augmenter la densité volumique de remplissage en protubérances 6 au voisinage de la paroi interne du pneu.

Préférentiellement le nombre de fibres porteuses par unité de surface exprimée en mm² est au moins égale à 0.1 et encore plus préférentiellement supérieure à 0.5 fibres par mm².

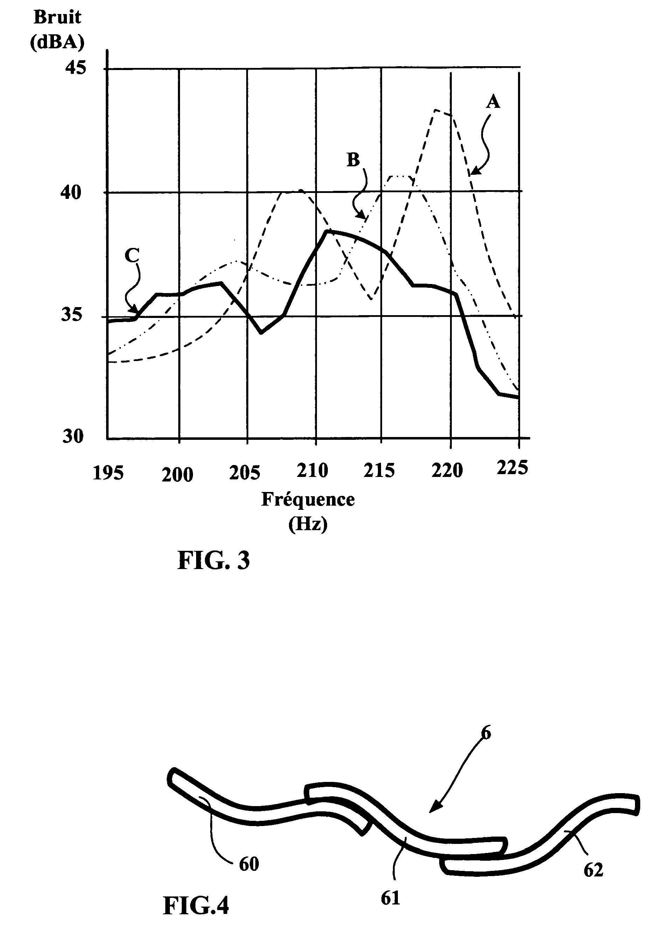

La figure 3 montre des résultats de mesure obtenus avec un pneu selon l'invention (tel que montré et décrit avec le support de la figure 1) en comparaison avec un pneu revêtu avec des fibres non ramifiées (ces fibres correspondant aux fibres porteuses du pneu de l'invention). La dimension du pneu est 215/55 R 17. La courbe A correspond au pneu de référence de même dimension sans aucun revêtement, celle repérée par l'indice B correspond au pneu avec des fibres non ramifiées et finalement la courbe repérée par l'indice C correspond au pneu selon l'invention. On mesure le bruit intérieur d'un véhicule équipé avec quatre pneus identiques. Le roulage est fait à une vitesse de 40 km/h sur une chaussée disposant d'un revêtement apte à générer un bruit de cavité dans le pneu. Le bruit intérieur est mesuré dans le véhicule. Le pic de fréquence de 214 Hz correspond à celle du bruit de cavité. La diminution du bruit de cavité s'observe par une diminution de l'intensité sonore à cette fréquence :

| | Gain par rapport au pneu A de référence (sans revêtement interne) |
|---|---|
| Pneu B | - 2.6 dBA |
| Pneu C (invention) | - 4.9 dBA |

On note que le pneu selon l'invention permet un gain de 4.9 dBA par rapport au pneu de référence sans aucun revêtement interne et 2.6 dBA par rapport à un pneu pourvu d'un revêtement composé de fibres non ramifiées.

Dans une autre variante de réalisation d'une protubérance allongée 6 montrée à la figure 4, une fibre porteuse 60 est prolongée par une première fibre de ramification 61, elle même prolongée par une deuxième fibre de ramification 62. Dans cette variante, toutes les fibres porteuses et de ramification employées sont identiques. Ainsi, il est possible d'obtenir une longueur importante de protubérance en utilisant successivement plusieurs fois le même procédé de fixation des fibres (porteuses et de ramification).

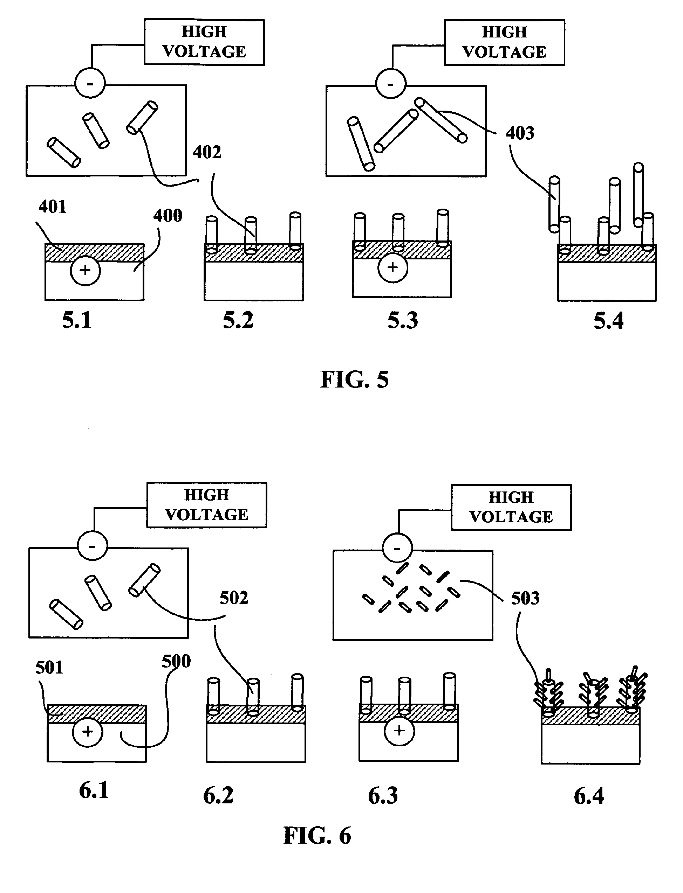

Sur la figure 5, on montre la mise en oeuvre du procédé de flocage selon lequel les poils porteurs 402 sont prolongés par un poil de ramification 403 de caractéristiques dimensionnelles identiques à celle des poils porteurs. Cette mise en oeuvre permet de réaliser des protubérances du type de celle montrée à la figure 4. Dans un premier temps, un corps 400 est recouvert sur une surface avec une colle 401 pour la fixation de poils. Des poils porteurs 402 sont soumis à une forte charge électrique négative tandis que le corps 400 et la colle 401 sont soumis à une forte charge électrique positive (fig. 5.1). Sous l'action de ces charges, les poils porteurs 402 sont libérés et projetés sur la surface encollée du corps 400 (fig. 5.2). La densité des poils porteurs 402 est comprise entre 2 et 50 poils par millimètre au carré de surface du corps 400 (bornes incluses). Dans une seconde étape (fig. 5.3), des fibres de ramification 403 sont projetées sur les fibres porteuses en place sur le corps 400 en soumettant ces fibres de ramification à une forte charge électrique négative tandis que le corps 400, la colle 401 et les fibres porteuses 402 sont soumis à une forte charge électrique positive. La figure 5.4 montre la surface du corps 400 recouverte de poils porteurs 402 prolongés par des poils de ramification 403. La colle 401 employée pour le collage des poils porteurs 402 et des poils de ramification 403 est une résine de type époxy ou préférentiellement une colle soluble à l'eau pour atténuer l'augmentation de rigidité liée au collage des poils de ramification 403 sur les poils porteurs 402.

Dans une autre variante de réalisation montrée à la figure 6, on emploie les mêmes poils porteurs 502 que ceux utilisés pour la description de la variante montrée avec la figure 5. On voit dans une première étape (figs. 6.1 et 6.2) la même mise en place de poils porteurs 402 sur une surface encollée 501 d'un corps 500. Dans une seconde étape (fig. 6.3) on charge négativement un ensemble de fibres de ramification 503 de dimensions réduites par rapport à celles des poils porteurs. Grâce à cette opération, on peut fixer sur chaque poil porteur 502 une pluralité de poils de ramification 503 comme le montre la figure 6.4.

L'invention n'est pas limitée aux exemples décrits et représentés et diverses modifications peuvent y être apportées sans sortir de son cadre. On peut en outre pourvoir les cavités formées sur la bande de roulement (rainures, incisions) avec le même type de protubérances allongées formées par au moins une fibre porteuse sur laquelle est fixée au moins une fibre de ramification.

Par ailleurs, les fibres décrites jusque là ont une section de forme circulaire ou sensiblement circulaire : l'invention n'est en rien limitée à cette forme spécifique et toute autre forme peut être employée de manière équivalente.

Enfin, il a été jusque-là décrit un mode de réalisation selon lequel les fibres porteuses sont fixées directement sur la paroi interne du pneu puis dans un deuxième temps les fibres de ramification sont fixées à ces fibres porteuses selon le procédé décrit dans ce document. Il peut être plus commode, en fonction de la dimension du pneu par exemple, de procéder à la formation d'un matériau de revêtement de façon indépendante du pneu en revêtant une feuille d'un matériau approprié avec des fibres porteuses portant elles mêmes des fibres de ramification. Ce matériau de revêtement peut alors être mis en place contre la paroi interne du pneu ou de la roue en le fixant, par exemple, par collage.

## Revendications

1. Pneu (1) destiné à un usage sans chambre à air, ce pneu (1) comprenant un sommet (3) pourvu d'une bande de roulement (31) destinée à venir en contact avec la chaussée pendant le roulage, des flancs (4) prolongeant de part et d'autre le sommet, ces flancs étant reliés à des bourrelets (5) destinés à être en contact avec une jante de montage (2) du pneu, ce pneu ayant une paroi interne (10) délimitant avec la jante de montage (2) une cavité interne (100) pour permettre le gonflage du pneu,
ce pneu comprenant, sur au moins une partie (11) de sa paroi interne (10) délimitant la cavité interne (100), une pluralité de protubérances (6) de forme allongée formant un revêtement dense, ce pneu étant **caractérisé en ce que** ces protubérances (6) de forme allongée comprennent une pluralité de fibres porteuses (60) et une pluralité de fibres de ramification (61), lesdites fibres de ramification étant fixées auxdites fibres porteuses, chaque fibre porteuse (60) ayant deux extrémités dont l'une (601) au moins est fixée à la paroi interne (10) du pneu.

2. Pneu selon la revendication 1 **caractérisée en ce que** les fibres porteuses (60) et les fibres de ramification (61) sont choisies dans le groupe constitué par des fibres de nylon, PET, acrylique, coton, lin, laine et rayonne.

3. Pneu selon la revendication 2 **caractérisé en ce que** les fibres porteuses (60) ont une longueur au moins égale à 0.5 mm et au plus égale à 10 mm, et un diamètre compris entre 0.01 mm et 0.5 mm.

4. Pneu selon l'une des revendications 1 à 3 **caractérisée en ce que** le nombre de fibres porteuses (60) est au moins 5 à 100 par unité de surface exprimée en mm².

5. Pneu selon l'une des revendications 1 à 4 **caractérisée en ce que** le nombre de fibres de ramification (61) fixées à une fibre porteuse (60) est au moins de 1 et au plus de 20.

6. Pneu selon la revendication 5 **caractérisée en ce que** les fibres de ramification (61) sont fixées sur les fibres porteuses (60) par un procédé de "flocage" et **en ce que** les fibres porteuses (60) sont fixées sur la paroi interne (10) par un procédé de "flocage".

7. Pneu selon l'une des revendications 1 à 6 **caractérisée en ce que** la totalité de la paroi interne (10) du pneu est pourvue de protubérances (6) de forme allongée, chaque protubérance étant composée d'une fibre porteuse (60) à laquelle est fixée au moins une fibre de ramification (61).

8. Pneu selon la revendication 1 **caractérisée en ce que** les fibres porteuses (60) et les fibres de ramification (61) sont en matériau caoutchouc.

## Claims

1. Tyre (1) intended for use without an air chamber, this tyre (1) comprising a crown (3) provided with a tread (31) intended to come into contact with the road surface during running, sidewalls (4) extending the crown on each side, these sidewalls being connected to beads (5) intended to be in contact with a mounting rim (2) on which the tyre is mounted, this tyre having an internal wall (10) delimiting, with the mounting rim (2), an internal cavity (100) to allow the tyre to be inflated,
this tyre comprising, over at least part (11) of its internal wall (10) delimiting the internal cavity (100), a plurality of protrusions (6) of elongate shape forming a dense coating, this tyre being **characterized in that** these protrusions (6) of elongate shape comprise a plurality of supporting fibres (60) and a plurality of branching fibres (61), the said branching fibres being attached to the said supporting fibres, each supporting fibre (60) having two ends, of which at least one (601) is attached to the internal wall (10) of the tyre.

2. Tyre according to Claim 1, **characterized in that** the supporting fibres (60) and the branching fibres (61) are chosen from the group consisting of nylon, PET, acrylic, cotton, flax, wool and rayon fibres.

3. Tyre according to Claim 2, **characterized in that** the supporting fibres (60) have a length of at least 0.5 mm and at most 10 mm and a diameter ranging between 0.01 mm and 0.5 mm.

4. Tyre according to one of Claims 1 to 3, **characterized in that** the number of supporting fibres (60) is at least 5 to 100 per unit area expressed in mm².

5. Tyre according to one of Claims 1 to 4, **characterized in that** the number of branching fibres (61) attached to one supporting fibre (60) is at least 1 and at most 20.

6. Tyre according to Claim 5, **characterized in that** the branching fibres (61) are attached to the supporting fibres (60) by a "flocking" process and **in that** the supporting fibres (60) are attached to the internal wall (10) by a "flocking" process.

7. Tyre according to one of Claims 1 to 6, **characterized in that** the entirety of the internal wall (10) of the tyre is provided with protrusions (6) of elongate shape, each protrusion being made up of a supporting fibre (60) to which at least one branching fibre (61) is attached.

8. Tyre according to Claim 1, **characterized in that** the supporting fibres (60) and the branching fibres (61) are made of rubber.

## Patentansprüche

1. Reifen (1), der für eine Verwendung ohne Luftschlauch bestimmt ist, wobei dieser Reifen (1) einen Scheitel (3) enthält, der mit einem Laufstreifen (31) versehen ist, welcher dazu bestimmt ist, während des Fahrens mit der Straße in Kontakt zu sein, wobei Flanken (4) den Scheitel zu beiden Seiten verlängern, wobei diese Flanken mit Wülsten (5) verbunden sind, die dazu bestimmt sind, mit einer Montagefelge (2) des Reifens in Kotakt zu sein, wobei dieser Reifen eine Innenwand (10) hat, die mit der Montagefelge (2) einen Innenhohlraum (100) definiert, um das Aufpumpen des Reifens zu erlauben,
wobei dieser Reifen über mindestens einen Teil (11) seiner den Innenhohlraum (100) begrenzenden Innenwand (10) mehrere Ausstülpungen (6) länglicher Form enthält, die einen dichten Belag bilden, wobei dieser Reifen **dadurch gekennzeichnet ist, dass** diese Ausstülpungen (6) länglicher Form mehrere Trägerfasern (60) und mehrere Verzweigungsfasern (61) enthalten, wobei die Verzweigungsfasern an den Trägerfasern befestigt sind, wobei jede Trägerfaser (60) zwei Enden hat, von denen mindestens eines (601) an der Innenwand (10) des Reifens befestigt ist.

2. Reifen nach Anspruch 1, **dadurch gekennzeichnet, dass** die Trägerfasern (60) und die Verzweigungsfasern (61) aus der Gruppe ausgewählt werden, die aus Nylon-, PET-, Acryl-, Baumwoll-, Flachs-, Wolle- und Rayonfasern besteht.

3. Reifen nach Anspruch 2, **dadurch gekennzeichnet, dass** die Trägerfasern (60) eine Länge mindestens gleich 0,5 mm und höchstens gleich 10 mm und einen Durchmesser zwischen 0,01 mm und 0,5 mm haben.

4. Reifen nach einem der Ansprüche 1 bis 3, **dadurch gekennzeichnet, dass** die Anzahl von Trägerfasern (60) mindestens 5 bis 100 pro Oberflächeneinheit, ausgedrückt in mm², ist.

5. Reifen nach einem der Ansprüche 1 bis 4, **dadurch gekennzeichnet, dass** die Anzahl von an einer Trägerfaser (60) befestigten Verzweigungsfasern (61) mindestens 1 und höchstens 20 beträgt.

6. Reifen nach Anspruch 5, **dadurch gekennzeichnet, dass** die Verzweigungsfasern (61) an den Trägerfasern (60) durch ein "Beflockungs"-Verfahren befestigt werden, und dass die Trägerfasern (60) an der Innenwand (10) durch ein "Beflockungs"-Verfahren befestigt werden.

7. Reifen nach einem der Ansprüche 1 bis 6, **dadurch gekennzeichnet, dass** die Gesamtheit der Innenwand (10) des Reifens mit Ausstülpungen (6) länglicher Form versehen ist, wobei jede Ausstülpung aus einer Trägerfaser (60) besteht, an der mindestens eine Verzweigungsfaser (61) befestigt ist.

8. Reifen nach Anspruch 1, **dadurch gekennzeichnet, dass** die Trägerfasern (60) und die Verzweigungsfasern (61) aus Kautschukmaterial sind.
